(19) Europäisches Patentamt
European Patent Office
Office européen des brevets

(11) **EP 2 071 308 A1**

(12) **DEMANDE DE BREVET EUROPEEN**

(43) Date de publication:
**17.06.2009 Bulletin 2009/25**

(51) Int Cl.:
***G01J 3/45*** *(2006.01)*

(21) Numéro de dépôt: **08170513.9**

(22) Date de dépôt: **02.12.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **11.12.2007 FR 0708621**

(71) Demandeur: **COMMISSARIAT A L'ENERGIE ATOMIQUE**
**75015 Paris (FR)**

(72) Inventeurs:
• **Parrein, Pascale**
  **38600 Fontaine (FR)**
• **Gidon, Pierre**
  **38130 Echirolles (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(54) **Dispositif d'analyse spectroscopique interférentielle**

(57) Le domaine de l'invention est celui des dispositifs d'analyse spectroscopique permettant l'analyse spectrale d'un rayonnement. Le dispositif selon l'invention est du type interférentiel, il comprend au moins une première couche réfléchissante (R) surmontée d'un empilement (E) de couches minces alternativement transparentes ($C_T$) et photo-absorbantes ($C_A$), chaque couche photo-absorbante étant reliée à des moyens de détection électronique fournissant un signal électronique primaire et le dispositif comportant également des moyens d'analyse des signaux primaires et agencés de façon à déterminer la répartition spectrale du rayonnement d'origine.

FIG. 2

## Description

Le domaine de l'invention est celui des dispositifs d'analyse spectroscopique permettant l'analyse spectrale d'un rayonnement.

Pour analyser un spectre lumineux, on utilise des dispositifs spectroscopiques. Les applications scientifiques, techniques et industrielles sont nombreuses. On citera le contrôle de matériaux, la détection d'espèces chimiques ou biologiques,....Pour réaliser une analyse spectroscopique, il existe deux grands types de systèmes d'analyse. Les premiers systèmes sont basés sur la dispersion chromatique de la lumière. La lumière à analyser est décomposée par un système de dispersion (lames dichroïques, prismes, réseaux de diffraction,...) et envoyée sur un certain nombre de capteurs, chaque capteur étant dédié à une bande spectrale donnée. Les seconds systèmes fonctionnent par interférométrie. La lumière à analyser passe à travers un interféromètre (Fizeau, Michelson,...). L'interférogramme issu de cet interféromètre permet de retrouver, par analyse de Fourier, la répartition spectrale de la lumière.

La détection la plus courante comporte uniquement trois détecteurs travaillant dans trois bandes spectrales différentes mais non disjointes. On récupère ainsi des informations dites colorimétriques permettant de déterminer la « couleur » de la lumière. Ce procédé est appliqué de façon universelle à la détection et à la formation d'images colorées dans la mesure où il est possible d'intégrer un grand nombre de capteurs colorimétriques. Bien entendu, cette information suffisante pour déterminer la couleur n'est pas suffisamment précise pour déterminer même approximativement la répartition spectrale. Ainsi, deux spectres très différents peuvent avoir la même couleur.

Par ailleurs, il existe des systèmes de détection multispectrale permettant d'obtenir des informations spectrales même rudimentaires avec une structure suffisamment simple et de taille réduite pour être compatible avec un agencement en matrice et un fonctionnement en parallèle permettant des applications en imagerie. Plusieurs approches ont été proposées. Ainsi, le brevet US 6 465 860 décrit un dispositif microélectronique constitué de couches successives de matériaux semiconducteurs ayant un spectre d'absorption différent, chaque couche absorbante étant séparée de la suivante par une couche isolante. La réalisation d'un dispositif de ce type est nécessairement complexe dans la mesure où chaque couche absorbante doit avoir une absorption différente de celle des autres couches et doit être parfaitement calibrée.

Le brevet FR 2 879 287 propose une seconde approche. Le dispositif décrit dans ce brevet est un détecteur spectroscopique comportant un guide d'onde monomode dont une des faces comporte un miroir. La lumière à analyser pénètre par la face opposée, se réfléchit sur le miroir créant ainsi une onde stationnaire à l'intérieur du guide d'onde par effet Lippmann. En effet, lorsqu'une onde incidente se réfléchit sur un miroir, elle interfère avec elle-même. L'interférogramme obtenu dans la structure est représentatif de la répartition spectrale présente dans l'onde incidente. Les ondes évanescentes créées par cette onde stationnaire sont captées par des détecteurs locaux placés en périphérie du guide d'onde. L'analyse des signaux issus de ces détecteurs permet de retrouver le spectre de la lumière. Il est clair que ce principe ne fonctionne bien que dans le cas de guide monomode. Or, la mise en oeuvre de systèmes de détection d'ondes évanescentes en périphérie d'un guide monomode dont les dimensions sont inférieures à la distance interfrange qui vaut $\lambda/2n$, $\lambda$ étant la longueur d'onde de l'onde incidente et n étant l'indice optique du matériau pose des problèmes technologiques considérables dès que les longueurs d'onde sont des longueurs d'onde optiques. Le dispositif d'analyse spectroscopique selon l'invention ne présente pas les contraintes du dispositif du brevet FR 2 879 287. Le principe du dispositif repose également sur l'existence d'une onde stationnaire présente sur un miroir. Pour capter cet interférogramme, le dispositif selon l'invention comporte essentiellement un empilement de couches minces, alternativement photo-détectrices et transparentes déposées sur le miroir. Le miroir crée l'interférogramme au sein de la structure multicouche. Les couches photo-détectrices permettent une détection locale de cette onde stationnaire. On dispose ainsi d'un système plus simple, sans guide d'onde et parfaitement adapté à une utilisation matricielle, la réalisation technique pouvant être effectuée par les techniques classiques utilisées en microélectronique.

Plus précisément, l'invention a pour objet un dispositif d'analyse spectroscopique interférentielle d'un rayonnement, **caractérisé en ce que** le dispositif comprend au moins une première couche réfléchissante surmontée d'un empilement de couches minces alternativement transparentes et photo-absorbantes.

Avantageusement, le dispositif comprend au moins une seconde couche réfléchissante surmontée d'un second empilement de couches minces alternativement transparentes et photo-absorbantes, la structure du second empilement étant différente de celle du premier empilement, les deux empilements étant disposés côte à côte. Avantageusement, au moins l'épaisseur de la première couche du premier empilement disposée immédiatement au-dessus de la première couche réfléchissante est différente de l'épaisseur de la première couche du second empilement disposée immédiatement au-dessus de la seconde couche réfléchissante.

De préférence, l'épaisseur des couches photo-absorbantes est inférieure ou égale à environ 10% de la longueur d'onde moyenne du rayonnement et l'épaisseur d'une couche transparente est inférieure ou égale à environ 25% de la longueur d'onde moyenne du rayonnement divisée par l'indice optique de ladite couche transparente.

Avantageusement, le dispositif comporte des moyens opto-mécaniques permettant de modifier la distance entre la couche réfléchissante et la première couche de détection.

De préférence, les couches transparentes sont en ITO et les couches photo-absorbantes en silicium amorphe ou les couches transparentes sont en CdTe et les couches photo-absorbantes en HgCdTe.

Avantageusement, chaque couche photo-absorbante est reliée à des moyens de détection électronique fournissant un signal électronique primaire et que le dispositif comporte de plus des moyens d'analyse d'un ensemble de signaux primaires issus d'un même empilement et agencés de façon à déterminer la répartition spectrale du signal lumineux. La détermination de la répartition spectrale du signal lumineux est effectuée par la résolution d'un problème inverse, c'est-à-dire par la comparaison d'un ensemble de signaux primaires avec des ensembles de signaux de référence correspondant à des spectres connus.

L'invention concerne également un imageur spectroscopique, comportant une pluralité de dispositifs ayant au moins l'une des caractéristiques précédentes et organisée de façon matricielle.

L'invention sera mieux comprise et d'autres avantages apparaîtront à la lecture de la description qui va suivre donnée à titre non limitatif et grâce aux figures annexées parmi lesquelles :

La figure 1 représente l'effet Lippmann optique ;
La figure 2 représente une structure de dispositif selon l'invention ;
La figure 3 représente l'extraction des signaux primaires ;
La figure 4 représente un exemple de réalisation technologique de la structure électronique d'un dispositif selon l'invention ;
La figure 5 représente un agencement particulier comportant plusieurs structures selon l'invention disposées en parallèle ;
La figure 6 représente l'ensemble des signaux primaires représentatif de l'interférogramme Lippmann.

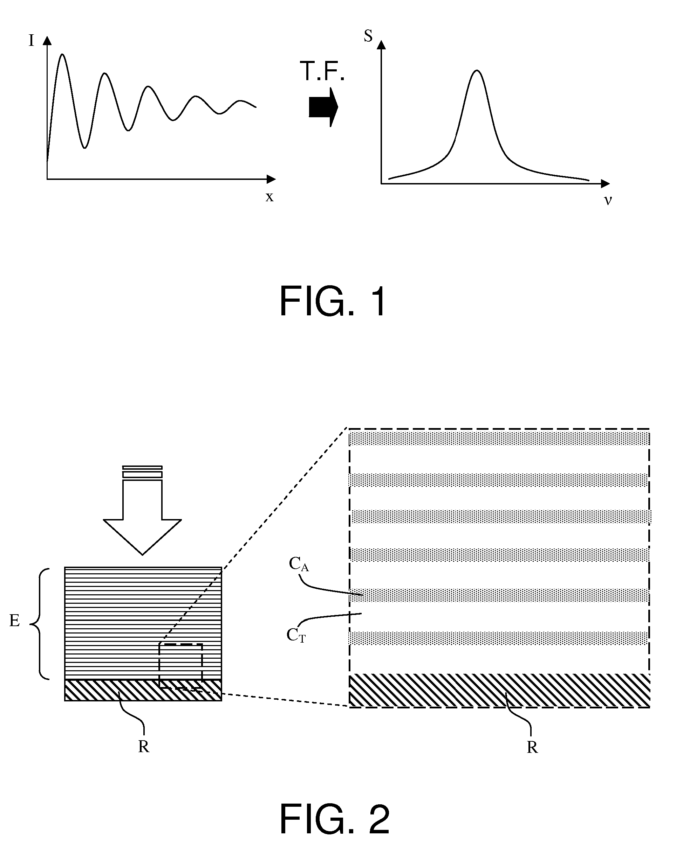

La figure 1 comprend deux vues représentant l'effet Lippmann. La première vue en haut de la figure 1 représente l'allure de la répartition spatiale dans la profondeur de la structure selon un axe x perpendiculaire au miroir M de l'intensité du champ de l'onde stationnaire dans un milieu homogène. L'origine de l'axe est prise sur le miroir. Cette onde est l'interférence de l'onde incidente avec l'onde réfléchie sur un miroir (effet Lippmann). La période de modulation de cet interférogramme est représentative de la longueur d'onde centrale de l'onde incidente et la largeur de l'interférogramme est proportionnelle à la longueur de cohérence de l'onde incidente et est inversement proportionnelle à la largeur spectrale du spectre de l'onde incidente. La deuxième vue représente la répartition spectrale S en fonction de la fréquence v calculée à partir de l'interférogramme. Ce calcul peut être effectué par exemple en effectuant une transformée de Fourier. L'effet Lippmann est donc particulièrement simple et élégant pour obtenir des informations sur le spectre d'un rayonnement, à condition que l'on puisse mesurer les caractéristiques de l'interférogramme.

Le dispositif d'analyse spectroscopique de l'invention est basé sur la génération d'une onde stationnaire issue d'un rayonnement réfléchi par un miroir. Le cœur de l'invention est de disposer, dans la zone d'interférence, de couches photo-absorbantes permettant de déterminer l'intensité de l'interférogramme au niveau de chaque couche. A titre d'exemple, une structure d'un dispositif selon l'invention est représentée en figure 2. Cette structure comprend essentiellement :

- une première couche réfléchissante R surmontée
- d'un empilement E de couches minces C alternativement transparentes $C_T$ et photo-absorbantes $C_A$. Sur la figure 2, les couches absorbantes $C_A$ comportent un motif en pointillés.

Les dimensions en épaisseur de la structure doivent être telles que, pour une source focalisée à l'intérieur du composant, un front d'onde plan se propage en son sein. Les dimensions sont de l'ordre de la distance de Rayleigh.

Bien entendu, la structure doit être adaptée au spectre du rayonnement à analyser. Les propriétés optiques et géométriques des couches vont déterminer la gamme spectrale de détection de la structure.

Si le signal a une longueur d'onde centrale $\lambda_C$ et une largeur spectrale $\Delta\lambda$, on démontre que la longueur de cohérence $L_C$ du signal vaut environ $\dfrac{\lambda_C^2}{\Delta\lambda}$ , que les franges d'interférence constituant l'interférogramme auront un pas p égal à $\dfrac{\lambda_C}{2n}$ et que l'interférogramme a une largeur $l_C$ égale à $\dfrac{L_C}{2n}$ , n étant l'indice optique des couches minces transparentes.

On choisit alors des couches minces transparentes d'épaisseur plus faible que le pas des franges. Un bon critère est que l'épaisseur des couches transparentes ne doit pas dépasser la moitié du pas p des franges afin de respecter le critère de Nyquist. Typiquement, pour les applications dans le visible, les couches transparentes ont une épaisseur de quelques dizaines de nanomètres et de façon plus générale, l'épaisseur doit être à 25% de la longueur d'onde moyenne divisée par l'indice optique n de la couche transparente.

On doit également choisir un nombre de couches suffisant pour couvrir la largeur de l'interférogramme.

Les couches minces absorbantes utilisées pour la détection doivent avoir certaines propriétés. L'absorption totale de ces couches doit être suffisamment faible de façon que le signal optique réfléchi par la structure soit encore suffisant pour qu'il y ait des interférences perceptibles. Le coefficient d'absorption de ces couches doit être suffisamment constant sur tout le spectre du signal lumineux.

L'épaisseur des couches absorbantes doit être :

- suffisamment fine afin d'être considérée comme quasi ponctuelle par rapport au pas des franges ;
- suffisamment importante pour permettre la détection d'un signal photo-électrique.

Généralement, pour des applications dans le visible ou le proche infra-rouge, l'épaisseur des couches absorbantes doit être comprise entre 5 et 12 nanomètres et leur nombre doit être compris entre cinq et dix.

Il est également intéressant, si on possède une connaissance a priori du spectre attendu, de disposer les couches absorbantes aux emplacements des maxima d'intensité de l'interférogramme.

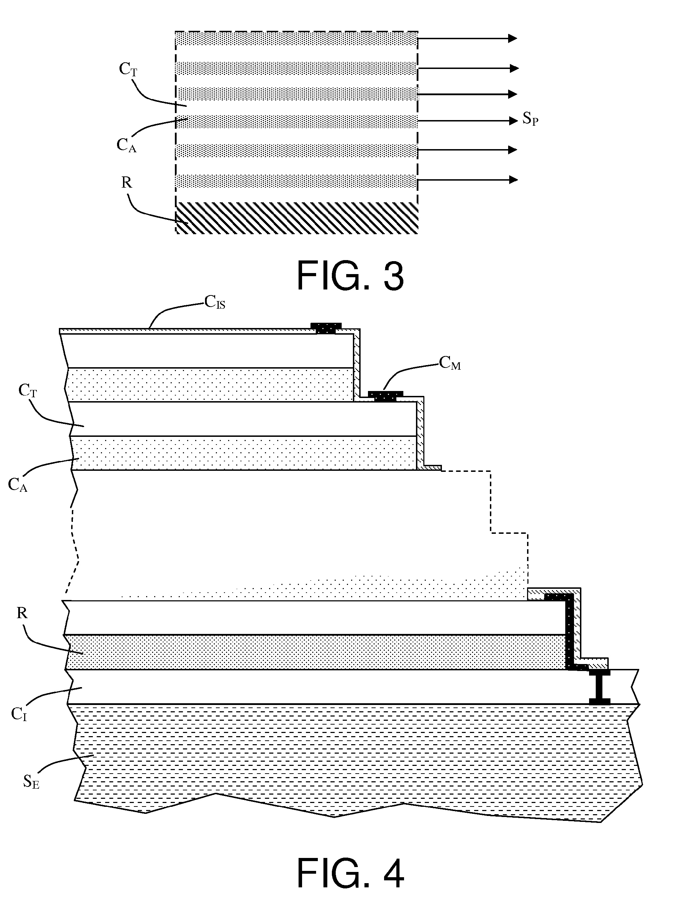

Pour réaliser l'interférogramme, il est nécessaire de récupérer les signaux primaires $S_P$ issus des couches photo-absorbantes comme indiqué sur la figure 3. L'emplacement des contacts électriques dépend des propriétés électriques des couches absorbantes. Si les porteurs de la couche absorbante sont rapidement recombinés, les contacts doivent se faire en dessus et au dessous de la couche : le matériau transparent doit être conducteur et agir en tant qu'électrode. Si les porteurs ne sont pas rapidement recombinés, la prise de contact électrique peut se réaliser de façon latérale : La couche transparente doit alors être isolante. Dans ce cas, le matériau conducteur peut être quelconque.

A titre d'exemple, la figure 4 représente une vue en coupe d'un agencement à recombinaison rapide. La structure d'analyse comprend essentiellement :

- un empilement de couches minces alternativement transparentes $C_T$ et photo-absorbantes $C_A$. Sur la figure 4, les couches absorbantes comportent un motif en pointillés. Les couches transparentes sont, par exemple, en oxyde d'Indium ou ITO et les couches absorbantes sont en silicium amorphe ;
- une couche réfléchissante R qui peut être en chrome, en aluminium ou en or disposée sous l'empilement de couches minces ;
- un empilement de couches d'interconnexions $C_I$ située sous la couche réfléchissante ;
- un substrat SE comportant des moyens d'amplification, comme par exemple des transistors de type « CMOS » ;
- des connexions métalliques $C_M$ disposées en colonne, chaque connexion étant reliée d'une part à une couche d'absorption et d'autre par à la couche d'interconnexions. Ces connexions sont réalisées sur au moins un des bords de la structure comme montré sur la figure 4. Elles sont décalées par rapport au plan de coupe. Une couche isolante $C_{IS}$ recouvre les bords de la colonne de contacts afin d'éviter les échanges avec les couches plus profondes.

La couche d'absorption peut être simple, homogène et fonctionner en photo-résistance. Elle peut être plus complexe et fonctionner en photodiode. Par exemple, elle peut comporter alors des jonctions métalliques entre des zones dopées.

Les matériaux de cette structure d'analyse sont plus particulièrement dédiés à la détection de rayonnement optique située dans le visible. Pour des applications dans le proche infra-rouge, on peut utiliser, par exemple, des couches transparentes en CdTe et des couches photo-absorbantes en HgCdTe. Ces matériaux sont entendus comme appartenant à la famille $Cd_xHg_{1-x}Te$ avec x compris entre 0 et 1. Dans ce cas, le procédé de réalisation comporte des étapes de croissance des couches en HgCdTe sur les couches en CdTe. La surface réfléchissante est obtenue par dépôt sur la structure finale retournée.

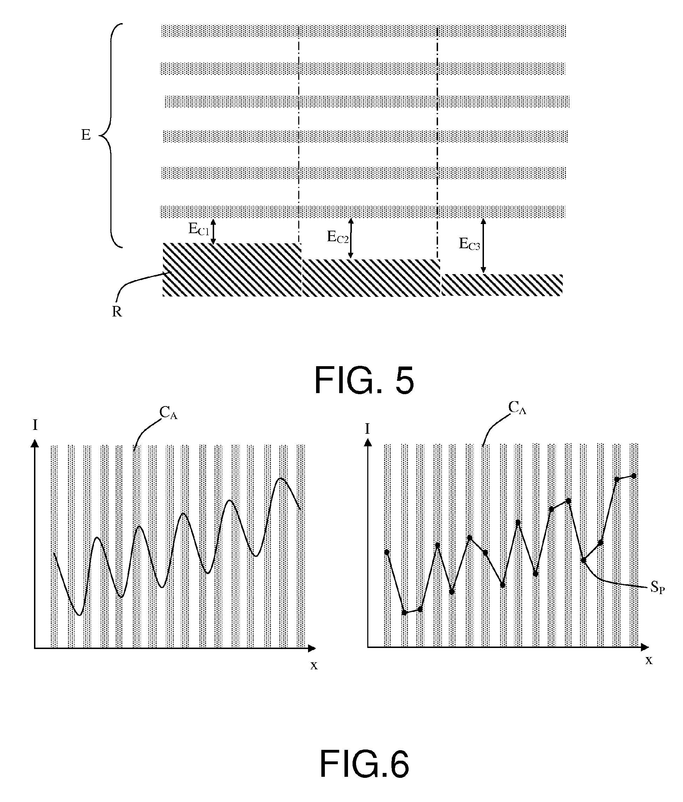

Comme on l'a vu, il n'est pas nécessairement facile de multiplier les points de mesure en multipliant le nombre de couches absorbantes du fait de l'absorption globale. Aussi, si l'on souhaite augmenter le nombre de points de mesure, il est possible de disposer plusieurs structures côte à côte comportant des empilements différents. De façon à faciliter la réalisation, il est intéressant de ne modifier qu'une couche d'un empilement à l'autre comme indiqué sur la figure 5 où l'épaisseur $E_{C1}$ de la première couche du premier empilement disposée immédiatement au-dessus de la première couche réfléchissante est différente de l'épaisseur de la première couche $E_{C2}$ du second empilement disposée immédiatement au-dessus de la seconde couche réfléchissante R.

On peut également envisager de disposer un système opto-mécanique permettant de faire varier la distance entre la couche réfléchissante et la première couche de détection.

Comme indiqué sur la courbe de droite de la figure 6, l'ensemble des signaux primaires $S_P$ issus des couches photo-absorbantes est représentatif de l'interférogramme initial dû aux ondes stationnaires du signal lumineux représenté sur la vue à gauche de la figure 6.

Pour déterminer la répartition spectrale à partir de la connaissance des signaux primaires, plusieurs approches sont possibles. On pourrait réaliser une transformée de Fourier de l'interférogramme reconstitué. Cependant, le nombre nécessairement limité de points disponibles et les déformations du signal dues aux réflexions multiples sur les différentes couches ne permettent pas d'utiliser simplement la transformée de Fourier. On utilise préférentiellement, pour déterminer la répartition spectrale initiale du signal, la résolution d'un problème inverse. Si le nombre de couches détectrices est suffisant, aucune connaissance a priori n'est nécessaire pour retrouver le spectre. Si le nombre de couches est limité, alors cette approche nécessite un certain nombre de connaissances a priori sur le spectre à analyser.

Dans cette approche, on définit f la fonction réponse du capteur. La réponse du capteur à un spectre S est un vecteur X de dimension N, N étant le nombre de couches détectrices. f est une fonction linéaire. La réponse d'un spectre S correspondant à la somme de plusieurs spectres $s_i$ spécifiques est la combinaison linéaire des réponses $x_i$ de ces spectres particuliers.

On peut écrire :

$$f(S) = X \text{ et } f(s_i) = x_i$$

Généralement, pour la résolution d'un problème inverse, on connaît $f(_{Si}) = x_i$ pour tout spectre $s_i$ et X la réponse du capteur au spectre S.

On peut retrouver l'information spectrale par corrélation. Dans une première étape, on normalise la réponse des spectres d'entrée et de la source étudiée. On a :

$$\tilde{x}_i = \frac{x_i}{\|x_i\|} \text{ et } \tilde{X} = \frac{X}{\|X\|}$$

On recherche le maximum du produit de corrélation D entre les différents vecteurs. On a :

$$D = \tilde{x}_i . \tilde{X} = \sum_{j=1}^{N} \tilde{x}_{ij} . \tilde{X}_j$$

Avec $x_{ij}$ coordonnées de $x_i$ et $X_j$ coordonnée de X. Lorsque deux vecteurs coïncident exactement, le produit D vaut 1, sinon le produit D est inférieur à 1.

Par cette approche, on peut retrouver la valeur centrale d'un pic d'émission avec seulement cinq couches détectrices dès lors que l'on connaît a priori sa largeur spectrale.

Pour améliorer la corrélation, il est également possible de réaliser des filtrages tels un filtrage de phase de façon à améliorer la discrimination. La corrélation filtrée permet aussi de détecter la présence d'un élément de spectre connu en réalisant un traitement du signal approprié.

Les avantages de ce dispositif d'analyse spectroscopique interférentielle sont nombreux. Il est facilement réalisable par les procédés couramment utilisés en micro-électronique. Ses dimensions sont très réduites. C'est un dispositif particulièrement robuste sans composants optiques fragiles ou complexes. On peut facilement l'adapter à une plage de longueurs d'onde donnée. On peut facilement constituer une matrice de dispositifs de ce type permettant de faire de l'imagerie spectroscopique. Enfin, il ne nécessite pas de moyens d'analyse complexes.

Les applications industrielles sont multiples. On citera les outils de calibration destinés à vérifier la conformité d'un spectre, les outils de recherche de spectres spécifiques destinés à l'analyse de gaz ou d'espèces chimiques, les imageurs spectroscopiques destinés aux applications scientifiques.

## Revendications

1. Dispositif d'analyse spectroscopique interférentielle d'un rayonnement, **caractérisé en ce que** le dispositif comprend au moins une première couche réfléchissante (R) surmontée d'un empilement (E) de couches minces alternativement transparentes ($C_T$) et photo-absorbantes ($C_A$), chaque couche photo-absorbante étant reliée à des moyens de détection électronique fournissant un signal électronique primaire et le dispositif comportant des moyens d'analyse d'un ensemble de signaux primaires issus d'un même empilement et agencés de façon à déterminer la répartition spectrale du signal lumineux.

2. Dispositif selon la revendication 1, **caractérisé en ce que** le dispositif comprend au moins une seconde couche réfléchissante surmontée d'un second empilement de couches minces alternativement transparentes et photo-absorbantes, la structure du second empilement étant différente de celle du premier empilement, les deux empilement étant disposés côte à côte.

3. Dispositif selon la revendication 2, **caractérisé en ce que** au moins l'épaisseur de la première couche du premier empilement disposée immédiatement au-dessus de la première couche réfléchissante est différente de l'épaisseur de la première couche du second empilement disposée immédiatement au-dessus de la seconde couche réfléchissante.

4. Dispositif selon l'une des revendications précédentes, **caractérisé en ce que** l'épaisseur de chacune des couches photo-absorbantes est inférieure ou égale à environ 10% de la longueur d'onde moyenne du signal lumineux.

5. Dispositif selon l'une des revendications précédentes, **caractérisé en ce que** l'épaisseur de chacune des couches transparentes est inférieure ou égale à environ 25% de la longueur d'onde moyenne du rayonnement divisée par l'indice optique de ladite couche transparente.

6. Dispositif selon l'une des revendications précédentes, **caractérisé en ce que** le dispositif comporte des moyens opto-mécaniques permettant de modifier la distance entre la couche réfléchissante et la première couche de détection.

7.  Dispositif selon l'une des revendications précédentes, **caractérisé en ce que** les couches transparentes sont en ITO et les couches photo-absorbantes en silicium amorphe.

8.  Dispositif selon l'une des revendications 1 à 6, **caractérisé en ce que** les couches transparentes sont en CdTe et les couches photo-absorbantes en HgCdTe.

9.  Dispositif selon la revendication 1, **caractérisé en ce que** la détermination de la répartition spectrale du rayonnement est effectué par la résolution d'un problème inverse, c'est-à-dire par la comparaison d'un ensemble de signaux primaires avec des ensembles de signaux de référence correspondant à des spectres connus.

10. Imageur spectroscopique, **caractérisé en ce qu'**il comporte une pluralité de dispositifs selon l'une des revendications précédentes organisée

# FIG. 1

# FIG. 2

FIG. 3

FIG. 4

# FIG. 5

# FIG.6

Europäisches
Patentamt

European
Patent Office

Office européen
des brevets

# RAPPORT DE RECHERCHE EUROPEENNE

Numéro de la demande

EP 08 17 0513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BHALOTRA S R ET AL: "Silicon-Based Micro-Fourier Spectrometer" IEEE TRANSACTIONS ON ELECTRON DEVICES, IEEE SERVICE CENTER, PISACATAWAY, NJ, US, vol. 52, no. 3, 1 mars 2005 (2005-03-01), pages 419-426, XP011127438 ISSN: 0018-9383 * abrégé; figures 1-4,7,8 * * alinéas [00I.], [0II.], [0VI.] * * page 421, colonne 1, ligne 6 - colonne 2, ligne 15 * * page 424, colonne 2, ligne 20-39 * | 1-10 | INV. G01J3/45 |
| X | HELEN L KUNG ET AL: "Standing-Wave Transform Spectrometer Based on Integrated MEMS Mirror and Thin-Film Photodetector" IEEE JOURNAL OF SELECTED TOPICS IN QUANTUM ELECTRONICS, IEEE SERVICE CENTER, PISCATAWAY, NJ, US, vol. 8, no. 1, 1 janvier 2002 (2002-01-01), XP011062022 ISSN: 1077-260X * abrégé; figures 1,3,4,8 * * alinéas [0II.], [0III] * | 1-10 | |
| X | STIEBIG H ET AL: "Interferometric sensors for spectral imaging" SENSORS AND ACTUATORS A, ELSEVIER SEQUOIA S.A., LAUSANNE, CH, vol. 120, no. 1, 29 avril 2005 (2005-04-29), pages 110-114, XP004856058 ISSN: 0924-4247 * le document en entier * | 1-10 | DOMAINES TECHNIQUES RECHERCHES (IPC) G01J |

Le présent rapport a été établi pour toutes les revendications

| Lieu de la recherche | Date d'achèvement de la recherche | Examinateur |
|---|---|---|
| Munich | 29 janvier 2009 | Varelas, Dimitrios |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**EP 2 071 308 A1**

## RÉFÉRENCES CITÉES DANS LA DESCRIPTION

**Documents brevets cités dans la description**

- US 6465860 B

- FR 2879287